# EUROPEAN PATENT APPLICATION

(11) **EP 2 963 537 A1**
(43) Date of publication of application: **06.01.2016**
(21) Application number: 15175506.3
(22) Date of filing: 06.07.2015
(51) Int. Cl.: G06F 3/12

(54) **PRINTER**

(30) Priority: 04.07.2014 JP 2014138542
(71) Applicant: Funai Electric Co., Ltd., Daito city Osaka 574-0013 (JP)
(72) Inventor: MISHIMA, Hideki, Osaka Osaka 574-0013 (JP)
(74) Representative: Osha Liang

(57) **Abstract**

A printer that prints based on printing settings information included in first printing information, includes a memory that stores second printing information that includes printed printing settings information; a setting unit that, when the first printing information and the second printing information have common information, sets the printed printing settings information as the printing settings information; and an image forming unit that performs image forming based on the printing settings information set by the setting unit.

## Description

### [Technical Field]

The present invention generally relates to a printing device that prints a data file stored in a storage medium.

### [Background]

Conventional printing devices print by setting conditions generated by automatically generating printing conditions according to a content (thumbnail image, text, or the like) of a document (for example, see Patent Literature 1).

### [Citation List]

### [Patent Literature]

[Patent Literature 1] Japanese Unexamined Patent Application Publication No. 2010-220046.

However, because there is a wide variety of elements in the printing conditions, such as size, type, count, and print layout of a sheet, the printing conditions generated according to the content of the document by the printing devices are not necessarily appropriate.

### [Summary of the Invention]

A printing device according to one or more embodiments of the present invention can mitigate a user's burden of setting desired printing conditions for printing.

According to one or more embodiments of the present invention, a printing device that prints a data file stored in a storage medium may comprises a storage unit that stores printing information that associates information of a data file and setting values used in printing the data file for each data file that is printed (hereinafter TIP data file); a specifying unit that specifies a data file to be printed (hereinafter TBP data file); a setting unit that, based on the printing information, selects one set from among the setting values used in printing the TIP data file having a common point with the TBP data file as setting values for printing the TBP data file; and a printing unit that uses the setting values selected by the setting unit to print the TBP data file. Here, printing the data file has the same meaning as printing data that is a content of the data file.

According to this configuration, the setting values for printing the TBP data file are selected from among the setting values used in printing the TIP data file; therefore, a user can print with useful print settings without much burden.

For example, when the TIP data file is printed multiple times, the printing information may include setting values for each of one or more setting values used in printing the data file and information indicating a count of the setting values being used in printing the data file, and the setting unit may select, as the setting values for printing the TBP data file, setting values where the count is maximum from among the setting values used in printing the TIP data file having a common point with the TBP data file.

As a result, setting values for printing used with the highest frequency can be selected for the TIP data file having a common point with the TBP data file; therefore, the user can print without much burden in an operation of changing the setting values.

Furthermore, the printing information may include information indicating a printing time of when the setting value is last used for each setting value, and the setting unit may select, as the setting values for printing the TBP data file, setting values where the count is maximum from among setting values used within a certain period from the present in printing the TIP data file having a common point with the TBP data file.

As a result, selection of the setting values is made by excepting setting values used in a past more distant than the certain period; therefore, reasonable setting values are more likely to be selected as the printing conditions currently desired by the user, which reduces burden on the user.

Furthermore, when the TIP data file is printed multiple times, the printing information may include setting values for each of one or more setting values used in printing the data file and information indicating a printing time of when the setting values are last used in printing the data file, and the setting unit may select, as the setting values for printing the TBP data file, setting values where the printing time is nearest to the present from among the setting values used in printing the TIP data file having a common point with the TBP data file.

As a result, setting values for printing used recently (at a time nearest to the present) can be selected for the TIP data file having a common point with the TBP data file; therefore, the user can print without much burden in the operation of changing the setting values.

Furthermore, the printing device may further comprise an identification unit that identifies a user, the specifying unit may perform specification of the TBP data file by accepting a designation of the TBP data file from the user, the printing information may include identification information of the user that designates the data file in association with the information of the data file, and the setting unit may perform the selection on a condition of the setting values being those used in printing the TIP data file designated by the same user as the TBP data file.

As a result, even when data files of the same filename are being printed under different printing conditions with each user, the user can print with useful printing settings without much burden.

Furthermore, the information of the data file in the printing information may include a filename of the data file, and the setting unit may handle a filename of the TBP data file and a filename of the TIP data file being the same for a predetermined number of characters or more as the TBP data file and the TIP data file having a common point.

As a result, when, for example, a data file group with similar filenames are successively printed under the same printing conditions, the user can perform printing of these data files without much burden in printing settings.

Furthermore, the information of the data file in the printing information may include a filename of the data file, and the setting unit may handle an extension included in a filename of the TBP data file and an extension included in a filename of the TIP data file being the same and character sequences made from a certain character count or more other than the extension in the filenames of both data files being the same as the TBP data file and the TIP data file having a common point.

As a result, the setting values for printing are selected from among setting values of a TIP data file that is the same data type as the TBP data file and has commonality in filenames; therefore, when data of the same type successively printed, the user can perform printing without much burden in printing settings.

Furthermore, the information of the data file in the printing information may include a filename of the data file, the storage unit may further store relation information that relates a plurality of extensions corresponding to data of the same type, and the setting unit may handle an extension included in a filename of the TBP data file and an extension included in a filename of the TIP data file being related in the relation information as the TBP data file and the TIP data file having a common point.

As a result, in a situation such as successively printing data files of a plurality of data types that are similar but have different file extensions, the user can print without much burden in printing settings.

Furthermore, the information of the data file in the printing information may include a filename of the data file, and the setting unit, when present are a plurality of data files that are printed having a common point with the TBP data file, may perform the selection on a condition of the setting values being those used in printing the TIP data file having a filename where a number of characters that are the same as a filename of the TBP data file is maximum.

As a result, the setting values used in printing the TIP data file with the highest commonality with the TBP data file are selected as the printing conditions; therefore, the user can print with useful printing settings without much burden.

Furthermore, the printing device may further comprise a display unit that displays the setting values selected by the setting unit; and a changing unit that, when a changing instruction by the user of the setting values displayed by the display unit is accepted, changes the setting values according to the changing instruction; wherein the printing unit, when a change is made in the setting values by the changing unit, prints using the setting values after the change.

As a result, the user can print by changing the setting values as the selected printing conditions.

Furthermore, the setting values may be a set of values corresponding respectively to a plurality of setting items used in printing, the storage unit may further store item information indicating a count of each value of the plurality of setting items being changed by the user, and the display unit, when displaying the setting values selected by the setting unit, based on the item information, may display the values of each setting item in order of largest count of the value being changed. Moreover, the setting values may be a set of values corresponding respectively to a plurality of setting items used in printing, the storage unit may further store item information indicating a time of when each value of the plurality of setting items is last changed, and the display unit, when displaying the setting values selected by the setting unit, based on the item information, may display the values of each setting item in order of nearest to the present when the value is changed.

As a result, because a region where the values of the setting items are displayed is limited, even in situation where the values of every setting item cannot be displayed at once, setting items with a large frequency of being changed or setting items that are recently changed are displayed with priority; therefore, the user can change the values of the setting items with comparatively few operations.

Furthermore, the printing device may further comprise a connection unit for connecting the storage medium, the display unit, when the storage medium is connected to the connection unit, may display the data files stored in the storage medium in order, and the specifying unit may accept the designation after the data files stored in the storage medium are displayed by the display unit.

As a result, the user can confirm and designate the TBP data file from among the data files stored in the storage medium.

Furthermore, the display unit may perform the display in an order that prioritizes data files where information of the data file is not included in the printing information from among the data files stored in the storage medium.

As a result, because the region where the values of the setting items are displayed is limited, even when every data file stored in the storage medium cannot be displayed at once, the user can confirm and designated as the printing target a new file or a file whose content is updated from a time of last printing with comparatively few operations.

Furthermore, a printing device according to one or more embodiments of the present invention that prints a data file stored in a storage medium, comprises: a storage unit that stores printing information that associates information of a type of a data file and setting values used in printing the data file for each type of TIP data file; a specifying unit that specifies a TBP data file; a setting unit that, based on the printing information, selects one set from among the setting values used in printing the TIP data file that is the same type as the TBP data file as setting values for printing the TBP data file; and a printing unit that uses the setting values selected by the setting unit to print the TBP data file.

According to this configuration, the setting values for printing the TBP data file are selected from among the setting values used in printing the TIP data file; therefore, the user can print with useful print settings without much burden.

According to one or more embodiments of the present invention, a printer that prints based on printing settings information included in first printing information may comprise a memory that stores second printing information that includes printed printing settings information; a setting unit that, when the first printing information and the second printing information have common information, sets the printed printing settings information as the printing settings information; and an image forming unit that performs image forming based on the printing settings information set by the setting unit.

One or more embodiments of the present invention can not only be realized as a printing device comprising the various aforementioned components but also as a printing method comprising processes executed by the components included in the printing device. Moreover, it can also be realized as a program for making a computer function as the components included in the printing device or a program that causes a computer to execute the processes included in the printing method. Moreover, such a program can be distributed via a computer-readable non-temporary recording medium such as a CD-ROM (Compact Disc-Read Only Memory) or a communication network such as the Internet.

The printing device according to one or more embodiments of the present invention, can mitigate the burden of setting the printing conditions necessary for the user to perform desired printing.

### [Brief Description of Drawings]

FIG. 1 is an external perspective view of a printing device according to one or more embodiments of the present invention.
FIG. 2 is a diagram illustrating a hardware configuration of the printing device according to one or more embodiments of the present invention.
FIG. 3 is a functional block diagram of the printing device according to one or more embodiments of the present invention.
FIG. 4 is a diagram illustrating a data configuration and a content example of printing information according to one or more embodiments of a first example of the present invention.
FIG. 5 is a flowchart illustrating operations of a printing device according to one or more embodiments of the first example of the present invention.
FIG. 6 is a view illustrating an example of an operation panel and an LCD screen (printing target selection screen) of the printing device according to one or more embodiments of the first example of the present invention.
FIG. 7 is a view illustrating an example of the operation panel and the LCD screen (printing settings screen) of the printing device according to one or more embodiments of the first example of the present invention.
FIG. 8 is a diagram illustrating a content example of the printing settings screen of the printing device according to one or more embodiments of the first example of the present invention.
FIG. 9 is a diagram illustrating another content example of the printing settings screen of the printing device according to one or more embodiments of the first example of the present invention.
FIG. 10 is a flowchart illustrating operations of the printing device according to one or more embodiments of a second example of the present invention.
FIG. 11 is a diagram illustrating a data configuration and a content example of the printing information according to one or more embodiments of the second example of the present invention.
FIG. 12 is a diagram illustrating a content example of the printing settings screen of the printing device according to one or more embodiments of the second example of the present invention.
FIG. 13 is a diagram illustrating a data configuration and a content example of change information according to one or more embodiments of a third example of the present invention.
FIG. 14 is a flowchart illustrating operations of the printing device according to one or more embodiments of the third example of the present invention.
FIG. 15 is a diagram illustrating a content example of the printing settings screen of the printing device according to one or more embodiments of the third example of the present invention.

### [Detailed Description of Embodiments]

Embodiments of the present invention will be described in detail below, with reference to the drawings. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In the examples that follow, a printing device is used in printing by estimating setting values of printing conditions desired by a user by recording and activating a settings history (setting value group) of printing conditions of when a data file (first printing information) stored in a storage medium is printed by the user.

(First Example)

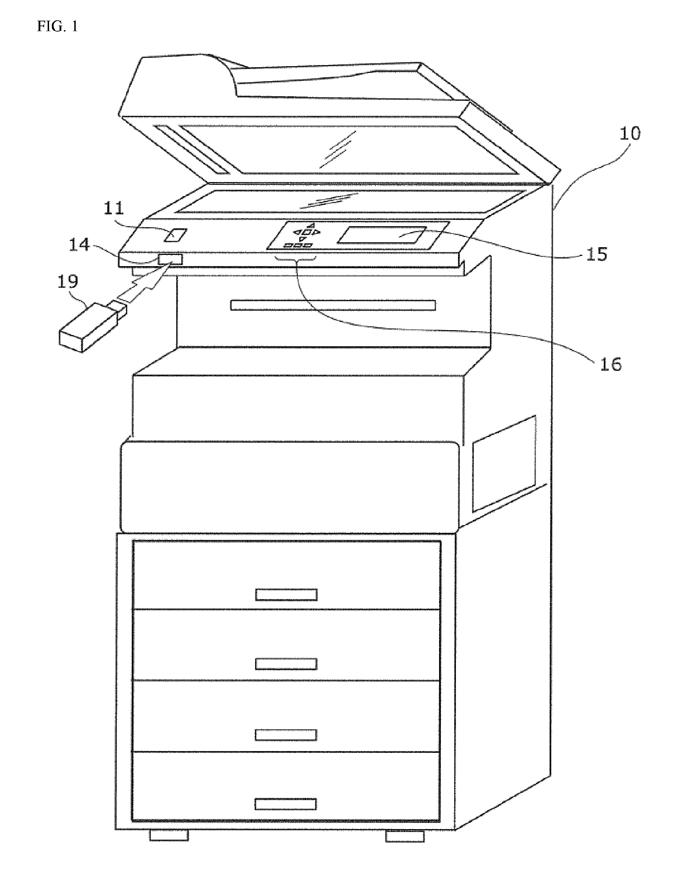

A printing device 10 according to one or more embodiments of a first example of the present invention will be described below using FIG. 1 to FIG. 9.

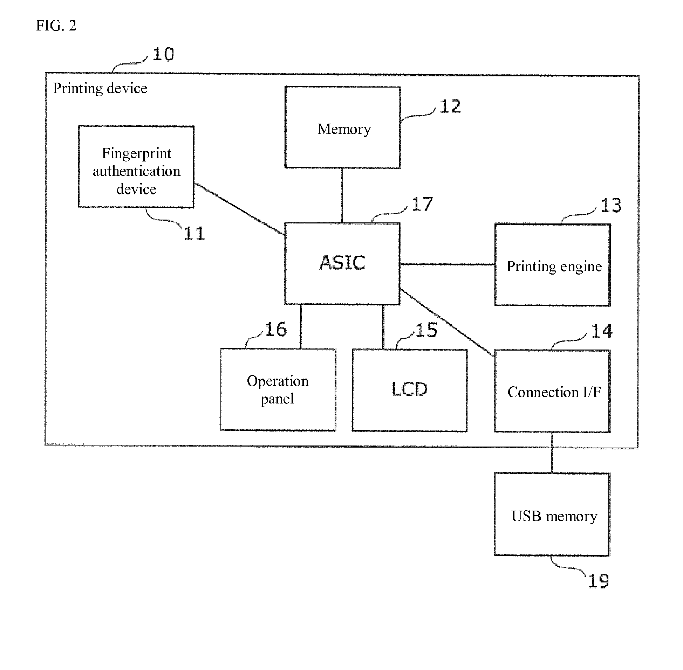

FIG. 1 is an external perspective view illustrating an example of the printing device 10. Moreover, FIG. 2 is a diagram illustrating a hardware configuration of the printing device 10.

The printing device 10 is a printer or an MFP (Multi-Function Product/Printer/Peripheral) having a printing function. As illustrated in FIG. 1 or FIG. 2, the printing device 10 may comprise a fingerprint authentication device 11, a memory 12, a printing engine 13, a connection interface (I/F) 14, an LCD (Liquid Crystal Display) 15, an operation panel 16, and an ASIC (Application-Specific Integrated Circuit) 17.

The fingerprint authentication device 11 acquires an image obtained by imaging a fingerprint of the user.

The memory 12 includes a ROM (Read-Only Memory) that holds in advance a program and data, a RAM (Random Access Memory) for temporary storage used when executing the program, and a non-volatile memory (flash memory or the like) that holds data.

The printing engine 13 receives an instruction of the ASIC 17, controls a printing mechanism (a paper feeding cassette, various rollers for sheet conveyance and the like, an image forming unit, a paper discharge tray, and the like) of the printing device 10, and executes printing on a sheet of an image relating to imparted data. The printing engine 13 performs control for conveying the sheet from a designated paper feeding cassette to the image forming unit, causing the image forming unit to form the image on the sheet, and sending this sheet to the paper discharge tray. A printing method used for the image forming unit to form the image on the sheet may be any from among a laser method, an inkjet method, a thermal transfer method, and the like.

The connection I/F 14 is an interface for connecting a USB (Universal Serial Bus) memory 19, which stores the data (data file) (first printing information) to be printed, and the ASIC 17. The USB memory 19 may be a non-volatile memory such as an SD memory card (registered trademark), a built-in storage medium in a hard disk, or the like as long as it is a storage medium that has portability and stores the data file. A connection method may be any method as long as an electrical (electromagnetic) connection is made and may be, for example, a non-contact connection.

The operation panel 16 is an input device comprising buttons and the like for accepting an operation from the user. The operation panel 16 may be configured by a touch panel superimposed on a front surface of the LCD 15.

The ASIC 17 is a digital ASIC that executes the program stored in the memory 12 and performs control of each part of the printing device 10. The ASIC 17 realizes a function of instructing printing by imparting the data of the data file to be printed (hereinafter TBP data file) and the setting values (printing settings) (printing settings information) for printing to the printing engine 13 according to an operation of the user.

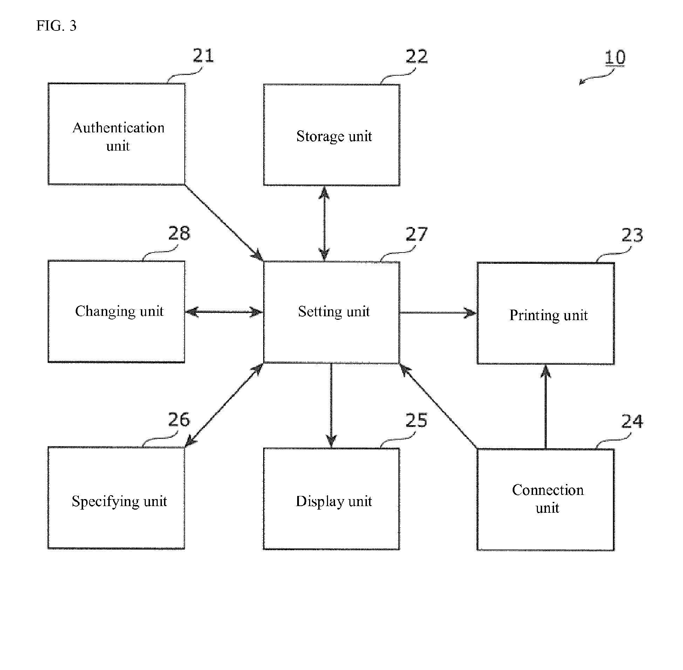

FIG. 3 is a diagram illustrating functional blocks of the printing device 10. The same diagram illustrates a functional configuration of the printing device 10 realized by the hardware configuration illustrated in FIG. 2.

To perform printing by setting the printing conditions desired by the user, this printing device 10 comprises an authentication unit 21, a storage unit 22, a printing unit 23, a connection unit 24, a display unit 25, a specifying unit 26, a setting unit 27, and a changing unit 28.

The authentication unit 21 identifies the user that uses the printing device 10 and transmits this to the setting unit 27 and is realized by using the fingerprint authentication device 11. When using the printing device 10, the user has the fingerprint authentication device 11 (see FIG. 1) read a fingerprint. This authentication unit 21 may identify the user by a method other than fingerprint authentication, e.g., authentication by an IC card or the like for authentication individually possessed by the user, authentication by the user inputting a personal identification number, etc.

The storage unit 22 is realized in a memory region of the memory 12 and holds printing information (described below), which is data storing setting values (printing settings) for printing for a data file that is printed (hereinafter TIP data file).

The printing unit 23 is realized by the printing engine 13 and the printing mechanism and prints the TBP data file under conditions according to designated setting values for printing.

The connection unit 24 is realized by the connection I/F 14 and connects the storage medium such as the USB memory 19 that includes the TBP data file. As a result, it becomes possible to acquire the data file stored in the storage medium such as the USB memory 19 from the printing unit 23 and the setting unit 27.

The display unit 25 displays an image, a character sequence, or the like for presenting to the user and is realized by the LCD 15.

The specifying unit 26 specifies and transmits to the setting unit 27 the TBP data file from one or more data files included in the storage medium connected by the connection unit 24. This specification is performed by, for example, listing the one or more data files included in the storage medium by the display unit 25 and accepting a designation by the user of one data file from among these.

The setting unit 27 selects (sets), based on the printing information stored in the storage unit 22, setting values (printed printing settings information) used in printing a TIP data file (second printing information) of the same user having a common point with the data file specified to be printed by the specifying unit 26 as the setting values (printing settings) for printing. Moreover, a function of causing the display unit 25 to display the selected setting values, a function of accepting a change in the setting values by the changing unit 28, and a function of transmitting the setting values to the printing unit 23 are further provided.

The changing unit 28 transmits the change in the setting values of the setting unit 27 according to a change instruction when a change instruction by an operation of the operation panel 16 by the user is accepted for the setting values displayed on the display unit 25. An entirety or a portion of the functions of the specifying unit 26, the setting unit 27, and the changing unit 28 may be realized by the ASIC 17 executing the program for control stored in the memory 12.

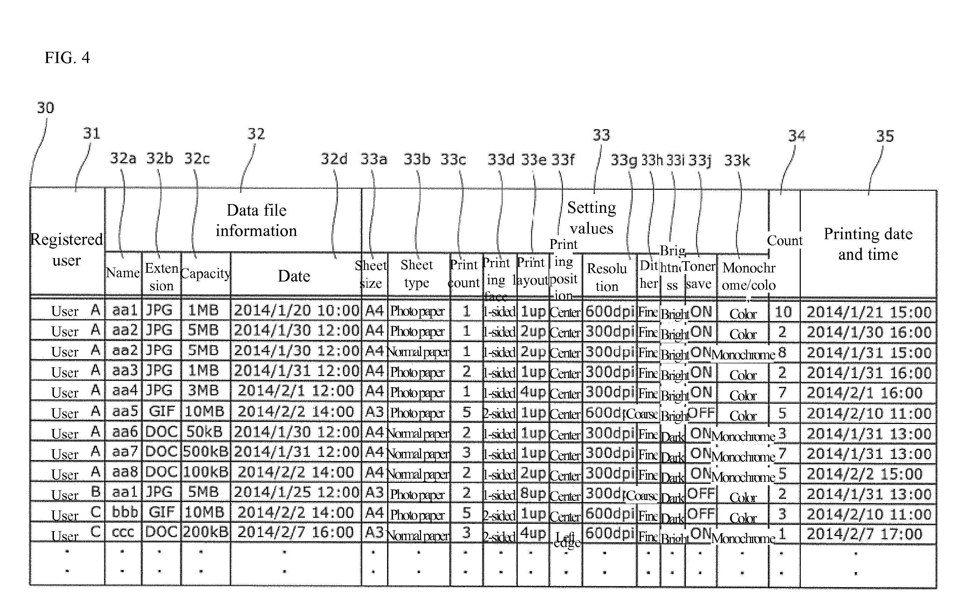

The printing information used in the printing device 10 provided with the configuration described above will be described below using FIG. 4.

Printing information 30 is information of the data file and the setting values used in the printing thereof are associated for each TIP data file. The printing information 30 is updated according to the data file used in printing, the setting values, and the like each time printing is executed. As illustrated in FIG. 4, the printing information 30 is configured including a registered user 31, data file information 32, setting values 33, a count 34 (count information), and a printing date and time 35 (time information).

The registered user 31 is identification information of the user registered in advance and is, for example, a username. This username is registered in advance in association with information such as the fingerprint. The information such as the fingerprint may be used as the registered user 31 as long as it is information that can identify the user.

The data file information 32 is information about the data (data file) that is printed. This is, for example, information indicating a filename (file name information) managed by a file system and is configured from a name 32a that is a portion of the file name, an extension 32b (first extension information) that is a portion of the filename, a capacity 32c that indicates a size of the file, and a date 32d that indicates the last update time of the file.

The setting values 33 are setting values indicating the printing conditions used in printing and are a set of values for each setting item. Included as the setting items are a sheet size 33a, a sheet type 33b, a print count 33c, a printing face 33d, a print layout 33e, a printing position 33f, a resolution 33g, a dither 33h, a brightness 33i, a toner save 33j, and monochrome/color 33k. The sheet size 33a and the sheet type 33b indicate distinctions (A4 size, A3 size, photo paper, normal paper, and the like) in the paper feeding cassettes used in printing. The print count 33c indicates a number of sheets to print. The printing face 33d indicates one-sided printing or two-sided printing. The print layout 33e indicates how many pages will be printed on one sheet; for example, a value of "2 up" indicates printing two pages on one sheet. The printing position 33f indicates in which position on the sheet to print the data. The resolution 33g indicates whether a dot density to be printed is, for example, 300 dpi or 600 dpi, or the like. The dither 33h indicates whether a size of a combination pattern of colors used in printing medium tones is fine or coarse or the like. The brightness 33i indicates whether to brighten or darken a tint of the printing, or the like. The toner save 33j indicates whether to use a function of decreasing a toner usage amount by brightening an overall color; use this function is indicated by, for example, a value of "ON." Monochrome/color 33k indicates whether to make the color of printing monochromatic (black and white) or in color.

The count 34 indicates a count (frequency) of executing printing based on a combination of the corresponding registered user 31, data file information 32, and setting values 33.

The printing date and time 35 indicates a time when the printing based on the combination of the corresponding registered user 31, data file information 32, and setting values 33 is last executed.

In FIG. 4, an example is illustrated with setting values (where the sheet size is A4, the sheet type is photo paper, the print count is 1, the printing face is one-sided, the print layout is 1 up, the printing position is centered, the resolution is 600 dpi, the pattern of dithering is fine, the brightness is bright, the toner save function is used, and printing is in color) when a user A prints a data file of a filename of "aa1.JPG" are already used ten times and the last printing date and time is January 21, 2014. Moreover, FIG. 4 illustrates an example where two sets of setting values are used when the user A prints a data file of a filename of "aa2.JPG"-where a usage count of one (setting values including the condition of printing in color) is 2 and a usage count of the other (setting values including the condition of printing in monochrome) is 8-and the like.

Based on this printing information 30, in the printing device 10, setting values such as those used at a high frequency by the user in the past for a data file having commonality with the TBP data file are selected and used in the printing upon displaying these setting values and having the user change these as necessary.

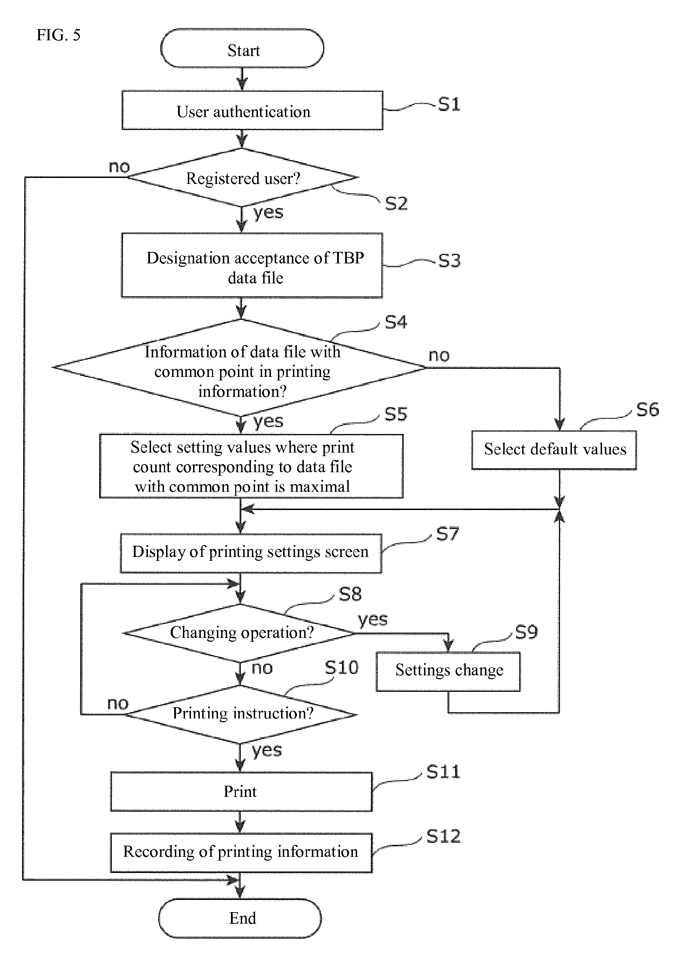

Operations of printing in the printing device 10 that comprises the aforementioned configuration and uses the aforementioned printing information 30 will be described below with reference to FIG. 5. FIG. 5 is a flowchart illustrating the operations of the printing device 10. The following description will assume a condition where the user connects (inserts) the USB memory 19 storing a plurality of data files to the connection I/F 14 and the user has the fingerprint read by the fingerprint authentication device 11.

First, the authentication unit 21 of the printing device 10 acquires the identification information (fingerprint) of the user (step S1) and determines whether this matches any identification information of a user registered in advance (step S2). When it is determined that this does not match identification information of a registered user at step S2, the printing device 10 does not execute printing.

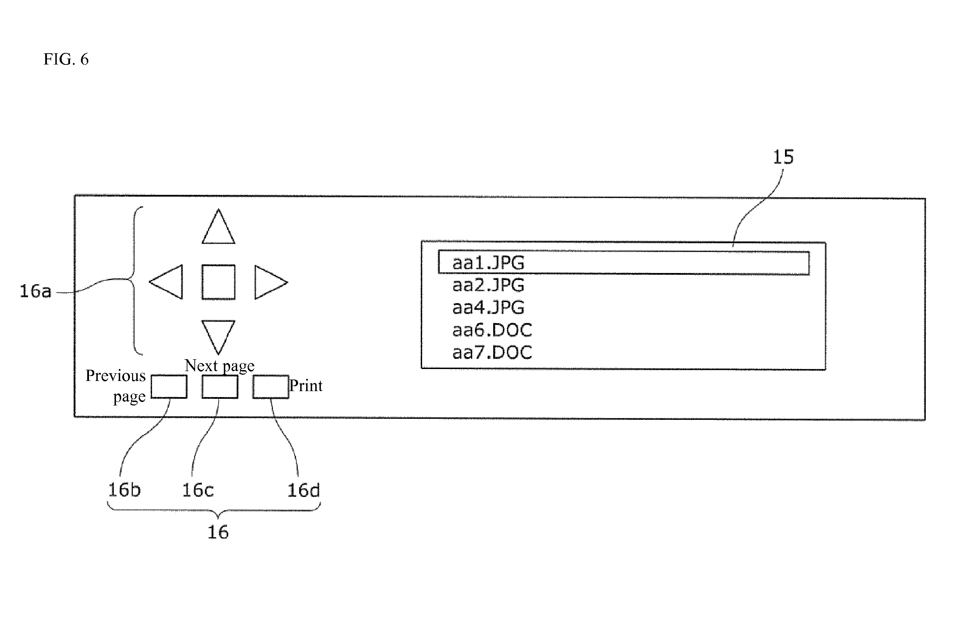

Next, the printing device 10 displays a list (printing target selection screen) of the data files stored in the USB memory 19 connected to the connection unit 24 (connection I/F 14) by the display unit 25 and specifies one TBP data file by the specifying unit 26 (step S3). This specification of the data file is performed according to the operation of the operation panel 16 made by the user. FIG. 6 illustrates the operation panel 16 and the LCD 15 displaying the printing target selection screen. The operation panel includes instruction buttons 16a such as up, down, left, and right and OK, a previous page display instruction button 16b, a next page display instruction display button 16c, a printing instruction button 16d, and the like. For example, in the printing target selection screen, by moving a cursor added to a filename of one data file according to an operation of the instruction buttons 16a, accepting a determination, and the like, the setting unit 26 specifies the one data file designated by the user to be printed.

When the TBP data file is specified, the setting unit 27 references the printing information 30 and determines whether there is a TIP data file of the same user having a common point with the TBP data file (step S4). As a specific method of specifying the data file having a common point with this TBP data file, there is, for example, a method of determining that a common point exists when filenames of both data files are the same for a predetermined character count or more. Here, the predetermined character count may be, for example, two characters, three characters, or the like or may be half, 1/3, or the like of a character count of the filename of the TBP data file. Moreover, for example, a method that determines that a common point exists when filenames of both data files include the same extension and character sequences made from a certain character count or more other than the extension are the same.

When the information of the TIP data file of the same user having a common point with the TBP data file is included in the printing information 30, the setting unit 27 selects as the setting values (printing settings) to be used in printing those where a corresponding count 34 is maximum from among the setting values 33 corresponding to this data file (step S5). The printing information 30 includes, in association with the information of the TIP data file, the setting values used in this printing and, when the same data file is printed multiple times with different setting values, includes a plurality of setting values. Therefore, the plurality of setting values may be present because there is a plurality of data files that are printed of the same user having a common point with the TBP data file or because there is a plurality of values corresponding to this TIP data file. In such a situation, at step S5, setting values where the count 34 is maximum are selected from the plurality of setting values. This is effective in mitigating a burden of printing setting of the user because it can be estimated that printing conditions (setting values) that the user used most in the past in printing the same type of data file have a high possibility of being desired in printing the current data file.

Furthermore, when the information of the TIP data file of the same user having a common point with the TBP data file is not included in the printing information 30, the setting unit 27 selects default values established uniformly in advance as the setting values (printing settings) to be used in printing (step S6).

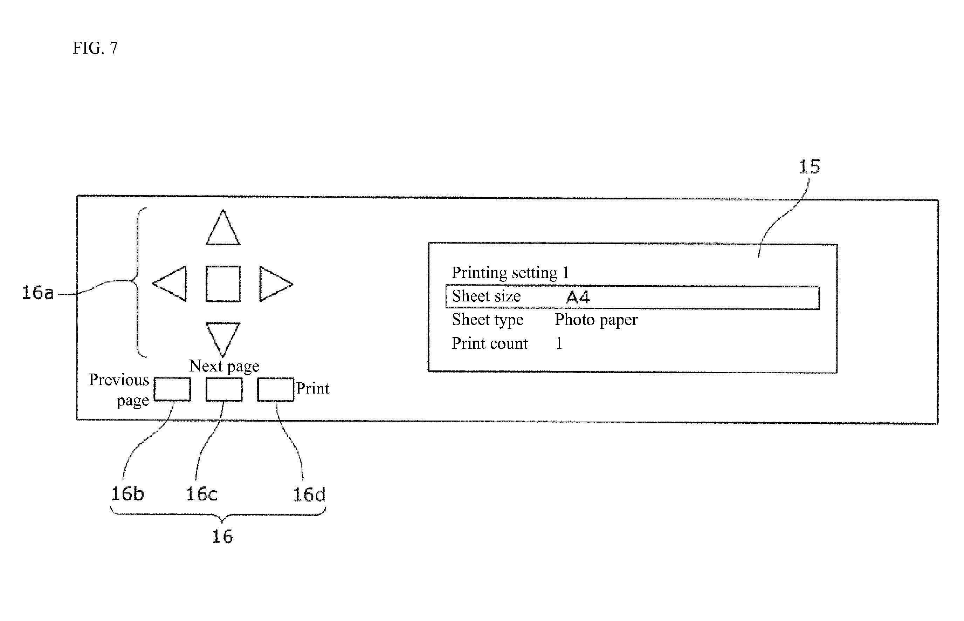

Next, the setting unit 27 causes the display unit 25 to display the setting values selected at step S5 or step S6 as a printing settings screen (step S7). FIG. 7 illustrates the LCD 15 displaying this printing settings screen and the operation panel 16. As illustrated in the same diagram, the LCD 15 can display, for example, five rows of character sequences, and the printing settings screen is configured to display the setting values (printing settings) across a plurality of pages. The printing device 10, for example, by the user operating the next page display instruction button 16c in the operation panel 16, performs a switching control of a page to display so the values of each setting item in the setting values can be viewed in order. Moreover, when the user makes a changing operation with the changing unit 28 by, in the printing settings screen, moving a cursor added to the value of one setting item according to an operation of the instruction button a, accepting a determination, and the like (step S8), the setting values (printing settings) used in printing are changed; that is, the value of the setting item designated by the user is changed as designated (step S9).

Furthermore, when the user operates the printing instruction button 16d (step S10), the printing device 10 causes the printing unit 23 to print the TBP data file with the setting values selected at step S5 or step S6 or these setting values where a portion is changed by the changing unit 28 as the printing conditions (step S11). Then, the setting unit 27 records the setting values used in printing in the storage unit 22 so as to include these in the printing information 30 in association with the information of the TBP data file (step S12). If the setting values used in printing are the same as the setting values 33 already included in the printing information 30, this recording is performed by increasing by 1 the value of the count 34 corresponding to these setting values 33. Moreover, if the setting values used in printing are not the same as any of the setting values 33 already included in the printing information 30, this recording is performed by newly recording the setting values and making the count 34 to be 1. By this recording (updating) of the printing information 30, the printing information 30 can be used again in the processes of S1 to S12 the next time the user attempts to print a data file stored in the storage medium.

A specific operation example of this printing device 10 will be described below. It is assumed that the printing information 30 stored in the storage unit 22 is of the content illustrated in FIG. 4.

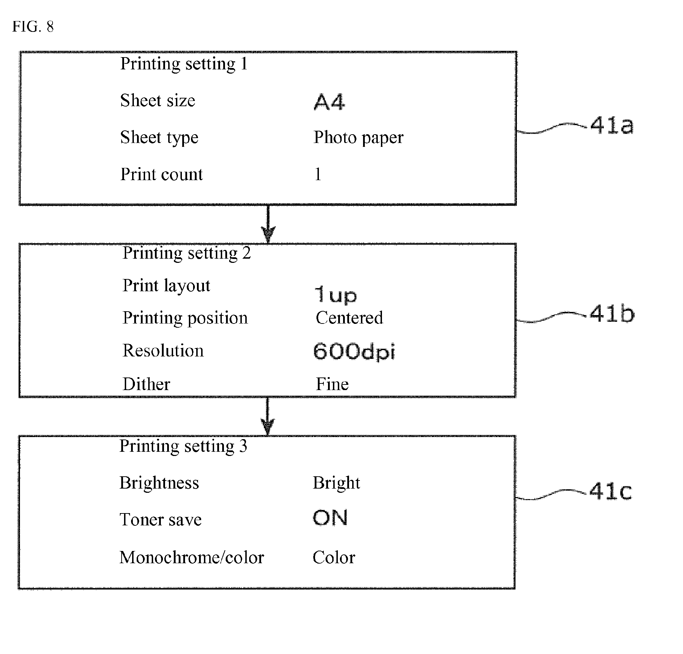

When the user A designates the data file "aa1.JPG" stored in the USB memory 19 to be printed (see FIG. 6), at step S4, a data file having a common point with this data file is searched from the printing information 30. Then, when a data file where the extension is the same and two or more characters of the filename other than the extension are the same is established as the data file having a common point, data files called "aal.JPG," aa2.JPG," "aa3.JPG," and "aa4.JPG" in the printing information 30 become search results, and setting values 33 corresponding to "aal.JPG," where the count 34 corresponding thereto is maximum (10), are selected at step S5. Then, the screen displayed by the display unit 25 at step S7 becomes one of a content illustrated in FIG. 8. First, a screen 41a is displayed; when the user performs display instruction of a next page, a screen 41b is displayed, and when the user further performs display instruction of a next page, a screen 41c is displayed. If there is a setting item for which change is desired among the setting items, it is favorable for the user to only change this setting item. The data file called "aa1.JPG" is printed at step S11 according to the setting values (printing settings) reflecting a result of this change.

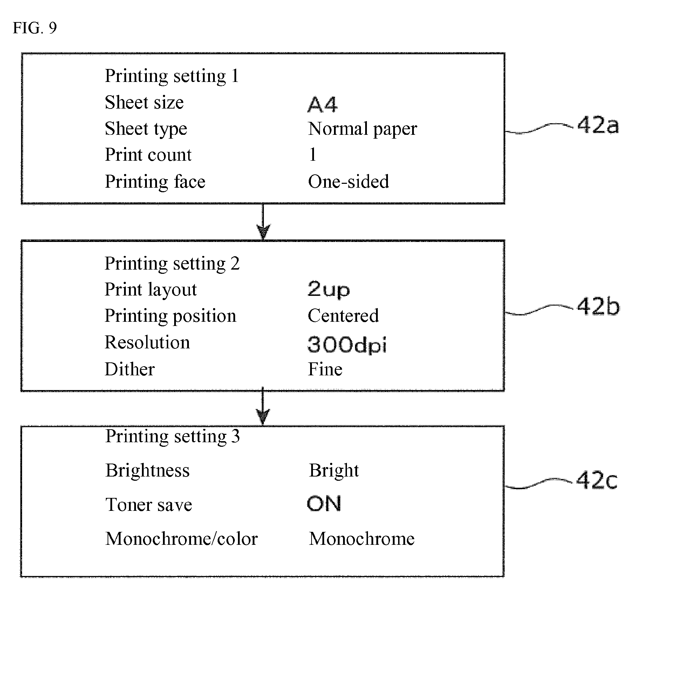

As another example, when the user A designates the data file "aa2.JPG" stored in the USB memory 19 to be printed, at step S4, a data file having a common point with this data file is searched from the printing information 30. Then, for example, when a data file where the extension is the same and three or more characters of the filename other than the extension are the same is established as the data file having a common point, the data file called "aa2.JPG" in the printing information 30 becomes the search result, and among the two setting values 33 corresponding to this data file, the setting values 33 where the corresponding count 34 is maximum (8) is selected at step S5. Then, the screen displayed by the display unit 25 at step S7 becomes one of a content illustrated in FIG. 9. First, a screen 42a is displayed; when the user performs display instruction of a next page, a screen 42b is displayed, and when the user further performs instruction of a next page, a screen 42c is displayed. The user can, for example, change the setting item of monochrome/color or the like. Then, if there is a change, the data file called "aa2.JPG" is printed at step S11 according to the setting values that reflect this.

At step S5, in correspondence to the TIP data file of the same user having a common point with the TBP data file, among the setting values 33 where the printing date 35 is within a certain period from the present (for example, within one week), those where the corresponding count 34 is maximum may be selected as the setting values (printing settings) used in printing. That is, selection of the setting values to be used in printing may be performed by excluding setting values used in past printing exceeding the certain period from the present. As a result, because, for example, setting values used in printing too distant in the past can be excluded, a possibility of being able to appropriately select the setting values desired by the user in the present is increased.

(Second Example)

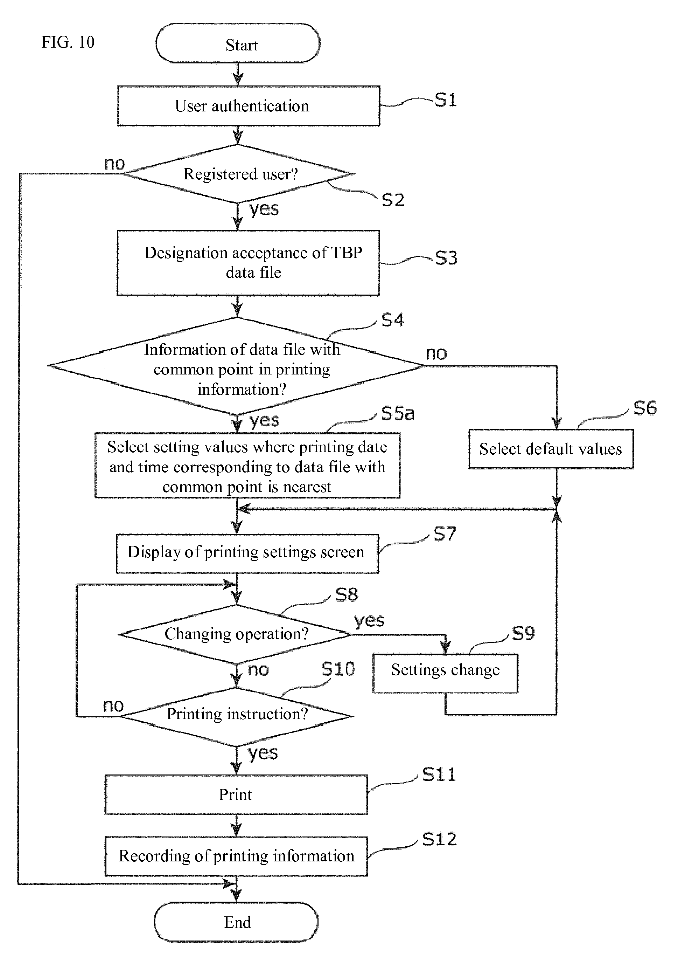

The printing device 10 according to one or more embodiments of a second example of the present invention will be described below using mainly FIG. 10 to FIG. 12. The printing device 10 according to one or more embodiments of the second example of the present invention may have the same hardware configuration as the printing device 10 according to one or more embodiments of the first example of the present invention. Moreover, the functional blocks are also roughly the same, but a portion of a processing content of the setting unit 27 is different. Detailed description of configurations and processes that may be the same as those of embodiments of the first example of the present invention will be omitted.

Operations of printing in the printing device 10 according to one or more embodiments of the second example of the present invention using the printing information 30 described above will be described with reference to FIG. 10. FIG. 10 is a flowchart illustrating the operations of the printing device 10 according to one or more embodiments of the second example of the present invention. These are fundamentally similar to the operations of the printing device 10 according to one or more embodiments of the first example of the present invention (see FIG. 5), but in embodiments of the second example of the present invention, step S5 is changed to step S5a. Here, detailed description of steps (processing procedures) that are the same as those in FIG. 5 will be omitted. Description will be given in assumption of the condition where the user connects (inserts) the USB memory 19 storing the plurality of data files to the connection I/F 14 and the user has the fingerprint read by the fingerprint authentication device 11.

First, the authentication unit 21 of the printing device 10 acquires the identification information of the user (step S1) and determines whether this matches any identification information of a user registered in advance (step S2).

Next, the printing device 10 displays the list (printing target selection screen) of the data files stored in the USB memory 19 connected to the connection unit 24 by the display unit 25 and specifies one TBP data file by the specifying unit 26 (step S3).

When the TBP data file is specified, the setting unit 27 references the printing information 30 and determines whether there is a TIP data file of the same user having a common point with the TBP data file (step S4). Here, data files of the same data type (extension) will be described as being handled as having a common point.

When the information of the TIP data file of the same user having a common point with the TBP data file is included in the printing information 30, the setting unit 27 selects as the setting values (printing settings) to be used in printing setting values where the printing date and time 35 is nearest (setting values nearest to the present) from among the setting values 33 corresponding to this data file (step S5a). Because there is a situation where a plurality of setting values corresponding to the TIP data file having a common point is present, at step S5a, one set of setting values with the nearest printing date and time 35 is selected from among the plurality of setting values. This is effective in mitigating the burden of printing setting of the user because it can be estimated that printing conditions (setting values) that the user used immediately before in printing the same type of data file have a high possibility of being desired in the current printing of the data file.

Furthermore, when the information of the TIP data file of the same user having a common point with the TBP data file is not included in the printing information 30, the setting unit 27 selects the default values established uniformly in advance as the setting values (printing settings) to be used in printing (step S6).

Next, the setting unit 27 causes the display unit 25 to display the setting values selected at step S5a or step S6 as the printing settings screen (step S7). Then, the changing unit 28, when the user makes a changing operation (step S8), changes the setting values (printing settings) to be used in printing (step S9). Moreover, when the user prints instruction (step S10), the printing device 10 causes the printing unit 23 to print the TBP data file with the setting values selected at step S5a or step S6 or these setting values where a portion is changed by the changing unit 28 as the printing conditions (step S11). Then, the setting unit 27 records the setting values used in printing in the storage unit 22 so as to include these in the printing information 30 in association with the information of the TBP data file (step S12).

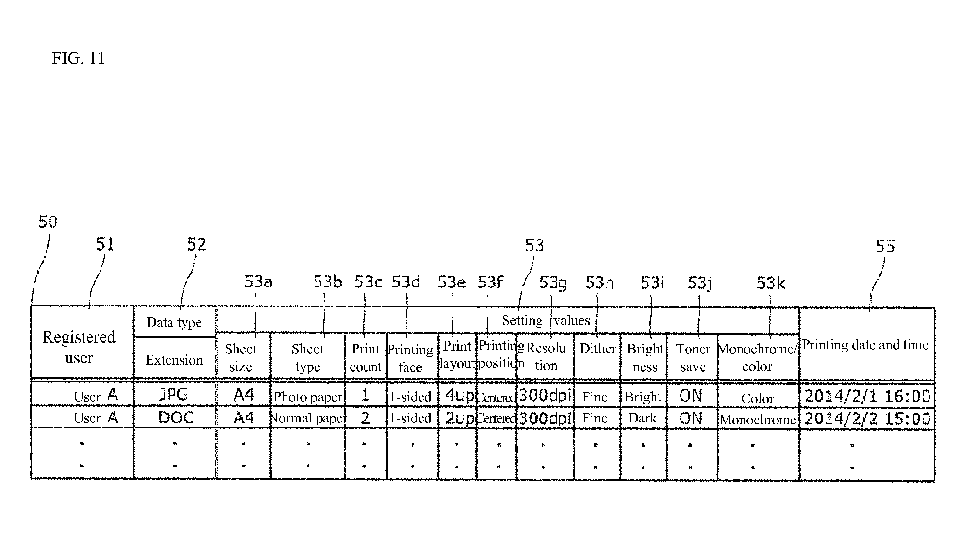

This printing device 10, the storage unit 22 may hold printing information 50 illustrated in FIG. 11 instead of the printing information 30 (see FIG. 4).

FIG. 11 is a diagram illustrating a data configuration and a content example of the printing information 50.

The printing information 50 is information that associates each data type (according to extension) of the data files that are printed with setting values used in printing data files of these data types. The printing information 50 is updated according to the extensions (second extension information) configuring the filenames (printed filename information), the setting values, and the like of the data files used in printing. As illustrated in FIG. 11, the printing information 50 is configured including a registered user 51, a data type 52, setting values 53, and a printing date and time 55.

The registered user 51 is identification information of a user registered in advance and is similar to the registered user 31.

The data type 52 is an extension that is a portion of the filename of data (data file) that is printed and indicates a distinction of an image, a document, or the like.

The setting values 53 are setting values indicating the printing conditions used in printing and are similar to the setting values 33. That is, the setting values 53 includes as setting items a sheet size 53a, a sheet type 53b, a print count 53c, a printing face 53d, a print layout 53e, a printing position 53f, a resolution 53g, a dither 53h, a brightness 53i, a toner save 53j, and monochrome/color 53k.

The printing date and time 55 indicates a time when printing based on a combination of a corresponding registered user 51, data type 52, and setting values 53 is last executed.

In FIG. 11, as a content example, an example is illustrated where, for example, setting values used when the user A last printed a data file whose data type is "JPG" (image) are setting values where the sheet size is A4, the sheet type is photo paper, the print count is 1, the printing face is one-sided, the print layout is 1 up, the printing position is centered, the resolution is 300 dpi, the pattern of dithering is fine, the brightness is bright, the toner save function is used, and printing is in color and the printing date and time thereof is February 1, 2014. Moreover, FIG. 11 also illustrates an example where setting values used when the user A last printed a data file whose data type is "DOC" (document) are setting values where the sheet size is A4, the sheet type is normal paper, the print count is 2, the printing face is one-sided, the print layout is 2 up, the printing position is centered, the resolution is 300 dpi, the pattern of dithering is fine, the brightness is dark, the toner save function is used, and printing is in monochrome and the printing date and time thereof is February 2, 2014.

The printing device 10 that uses such printing information 50 performs the operations illustrated in FIG. 10. Because the storage unit 22 that holds the printing information 50 does not hold setting values by data file but comes to hold setting values last used in printing by data type, at step S5a, when information of a TIP data file of the same user having a common point with the TBP data file (information of the same data type) is included in the printing information 50, the setting unit 27 comes to select setting values 53 corresponding to this data type as the setting values (printing settings) to be used in printing.

A specific operation example of the printing device 10 in this situation will be described. It is assumed that the printing information 50 stored in the storage unit 22 is of the content illustrated in FIG. 11.

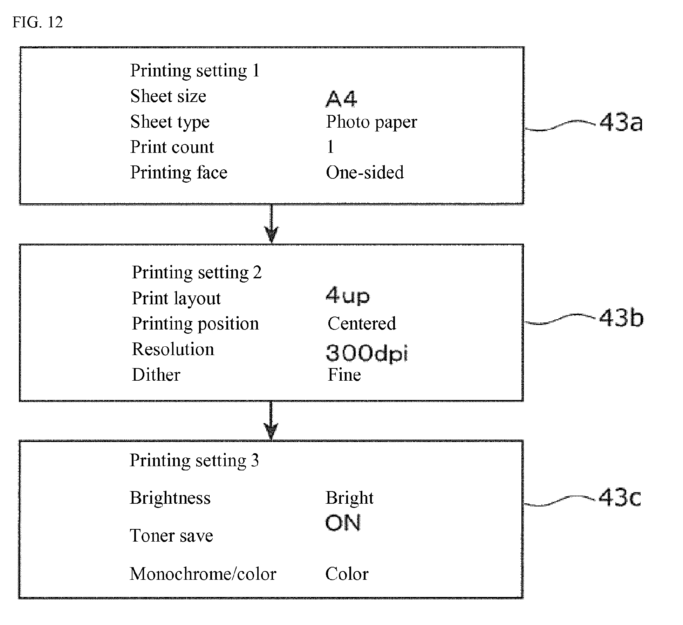

When the user A designates the data file "aa4.JPG" stored in the USB memory 19 to be printed, at step S4, a data file having a common point with this data file (the same data type) is searched from the printing information 30. Then, the data type called "JPG" in the printing information 50 becomes the search result, and the setting values 53 corresponding thereto are selected at step S5a. Then, the screen displayed by the display unit 25 at step S7 becomes one of the content illustrated in FIG. 12. First, a screen 43a is displayed; when the user performs display instruction of a next page, a screen 43b is displayed, and when the user further performs instruction of a next page, a screen 43c is displayed. If there is a setting item for which change is desired among the setting items, it is favorable for the user to only change this setting item. The data file called "aa4.JPG" is printed at step S11 according to the setting values (printing settings) that reflect a result of this change.

(Third Example)

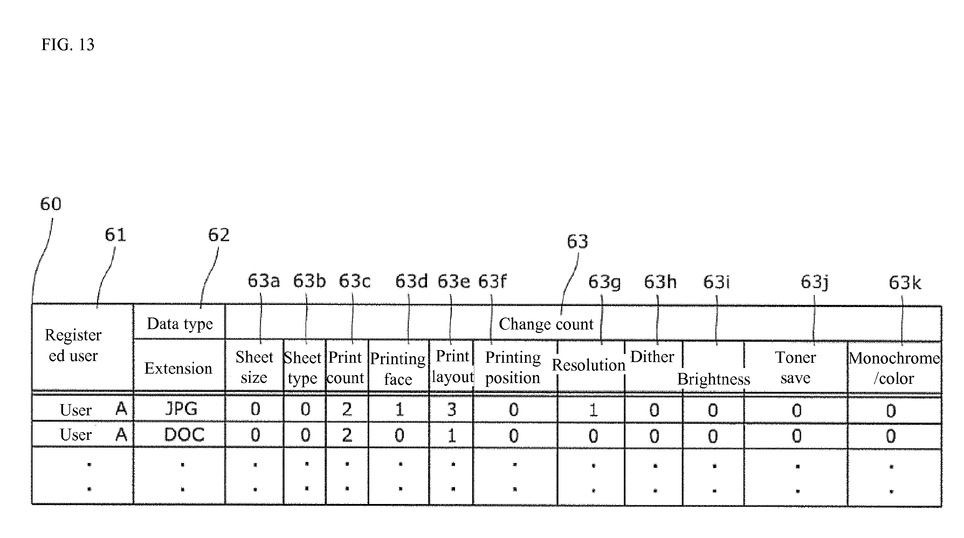

The printing device 10 according to one or more embodiments of a third example of the present invention will be described below using mainly FIG. 13 to FIG. 15. The printing device 10 according to one or more embodiments of the third example of the present invention also may have the same hardware configuration as the printing device 10 according to one or more embodiments of the first example of the present invention. Moreover, the functional blocks may also be roughly the same, but a portion of a storage content of the storage unit 22 and the processing content of the setting unit 27 is different. Detailed description of configurations and processes that may be the same as those of embodiments of the first example of the present invention will be omitted.

The storage unit 22 according to the present embodiment holds item information 60 illustrated in FIG. 13 in addition to the printing information 30.

FIG. 13 is a diagram illustrating a data configuration and a content example of the item information 60.

The item information 60 is information that records a count of the user changing a value of each setting item of the setting values indicated by the printing device 10 as the printing conditions. The item information 60 is updated each time the changing unit 28 changes a value of a setting item and printing is performed. As illustrated in FIG. 13, the item information 60 is configured including a registered user 61, a data type 62, and a change count 63.

The registered user 61 is identification information of a user registered in advance and is similar to the registered user 31.

The data type 62 is the extension that is a portion of the filename of data (data file) that is printed and indicates the distinction of an image, a document, or the like.

The change count 63 indicates a count of the value of each setting item being changed and printed. The change count 63 respectively includes a change count for a sheet size 63a, a sheet type 63b, a print count 63c, a printing face 63d, a print layout 63e, a printing position 63f, a resolution 63g, a dither 63h, a brightness 63i, a toner save 63j, and monochrome/color 63k.

Based on this item information 60, in the printing device 10, a printing settings screen is displayed configured so the setting items are arranged in an order prioritizing setting items whose values have a large change count.

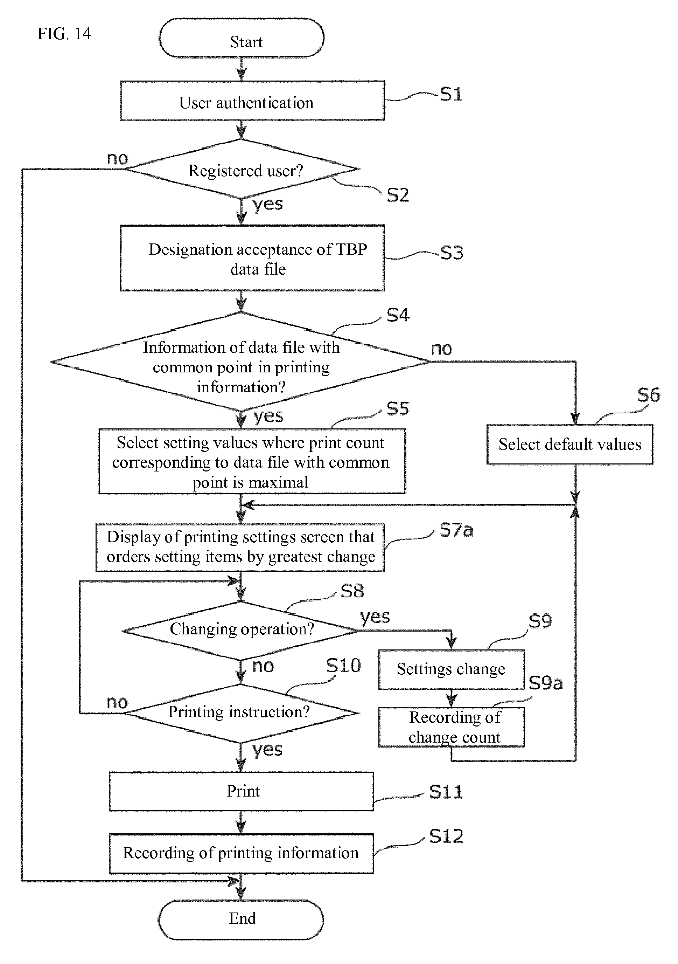

Operations of printing in the printing device 10 using the printing information 60 in addition to the printing information 30 described above will be described below with reference to FIG. 14. FIG. 14 is a flowchart illustrating the operations of the printing device 10 according to one or more embodiments of the third example of the present invention. These are fundamentally similar to the operations of the printing device 10 according to one or more embodiments of the first example of the present invention (see FIG. 5), but in embodiments of the third example of the present invention, step S7 is changed to step S7a, and step S9a is added.

Steps S1 to S6 are similar to the processing procedure described in embodiments of the first example of the present invention.

In succession to step S5 or step S6, the setting unit 27 causes the display unit 25 to display the setting values selected at step S5 or step S6 as the printing settings screen that orders the setting items in order of greatest change count based on the item information 60 (step S7a). Then, the changing unit 28, when the user makes a changing operation (step S8), changes the setting values (printing settings) to be used in printing (step S9) and updates the item information 60 so as to increase by 1 a count of the changed setting item (step S9a). However, the count of a setting item of the item information 60 is not increased more than once even if the same setting item is changed multiple times in one printing of the data file. Moreover, when the user gives the printing instruction (step S10), the printing device 10 executes steps S11, S12 similarly to embodiments of the first example of the present invention.

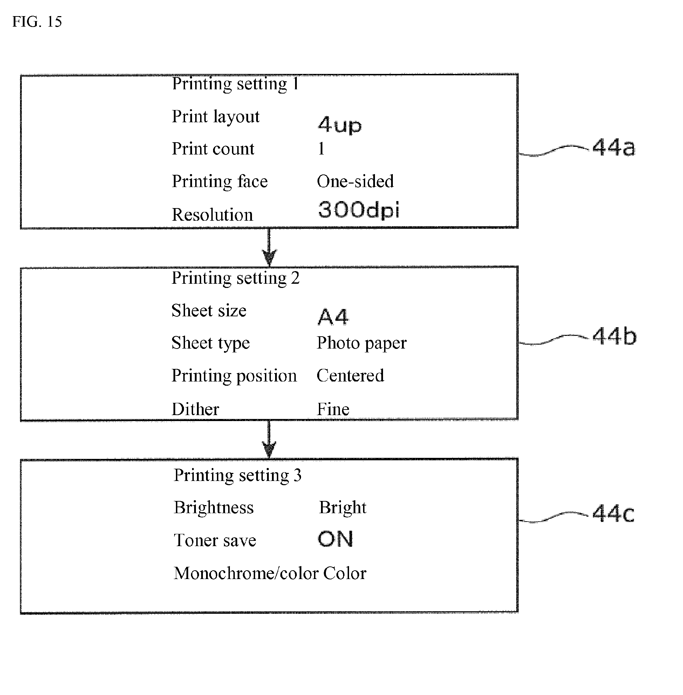

Step S9a, which records the item information 60 in this manner and, according to the change count of each setting item, establishes a display order of the setting items on the printing settings screen that displays the setting values to be used in printing, may be applied to, for example, the printing device 10 according to embodiments of the second example of the present invention. For example, a printing settings screen of the data file called "aa4.JPG" based on the printing information 50 illustrated in FIG. 11 as a modified example of embodiments of the second example of the present invention is as illustrated in FIG. 12, but if step S9a is applied based on the item information 60 of the content illustrated in FIG. 13, this becomes as illustrated in FIG. 15. In the content example of FIG. 13, the change count of the print count 63c for the data type of "JPG" is 2, the change count of the printing face 63d is 1, the change count of the print layout 63e is 3, the change count of the resolution 63g is 1, and the change counts of the other setting items are 0. Therefore, in a screen 44a that is first displayed, the respective values of the setting items such as the print layout, the print count, the printing face, and the resolution are displayed in order of highest change count; when the user performs display instruction of a next page, a screen 44b is displayed, and when the user further performs display instruction of a next page, a screen 44c is displayed. As a result, in a situation of changing a setting item with a high change frequency, the user is able to make a desired change with a small number of operations.

### (Other Examples)

The printing device according to embodiments of the present invention is described, but the present invention is not limited to those embodiments.

For example, in embodiments of the first example of the present invention, at step S5, in the situation where the information of the plurality of data files that are printed of the same user having a common point with the TBP data file is included in the printing information 30, the setting unit 27 may be configured so as to select setting values of a data file with the highest commonality. For example, a configuration may be such that, for example, setting values used in printing a TIP data file having a filename with a maximum number of same characters as the filename of the TBP data file are selected as the setting values (printing settings) used in printing. Moreover, a configuration may be such that relation information, which is information that associates two or more data types (extensions) that can be regarded as the same type, is held in advance in the storage unit 22 and the data type of the TBP data file and the data file of the data type associated with the relation information are handled as having a common point. For example, by associating "JPG" and "BMP" by the relation information, it becomes possible to handle a data file whose content is an image in JPEG (Joint Photographic Experts Group) format and a data file whose content is an image in a bitmap format as having a common point in terms of printing settings.

Furthermore, in embodiments of the third example of the present invention, the count of changing the setting items is made to be recorded by the item information 60, but a configuration may be such that a final change time (date and time) for each setting item is recorded. In this situation, the setting items can be displayed on the printing settings screen in an order that prioritizes setting items changed at a time near the present.

Furthermore, in the printing device 10, a configuration may be such that the user does not have to give an explicit instruction to print (for example, operation of the printing instruction button 16d) but, by merely designating the TBP data file, the setting values are automatically established by steps S1 to S6 described above and printing is performed. In this manner, the printing device may be configured so the user can set in advance a mode where printing is performed without changing the setting values and a mode where the setting values can be changed. Moreover, a configuration may be such that when only one data file is present in the storage medium such as the USB memory connected to the printing device 10, the user does not have to designate the TBP data file and the specifying unit 26 specifies this one TBP data file.

Furthermore, the printing device may be configured to display the printing target selection screen (see FIG. 6) by arranging in an order prioritizing data files that do not include the data file information 32 indicating a data file that is the same as the printing information 30 stored in the storage unit from among the one or more data files included in the storage medium such as the connected USB memory. As a result, a burden of an operation of the user for designating as the printing target a data file where a filename, a capacity, or a date is different from that of the TIP data file, that is, a new data file, is mitigated.

Furthermore, the printing device may use as a method of acquiring the identification information of the user, other than reading the fingerprint, a method that reads information (for example, medium identification information, user identification information set by the user, or the like) recorded in advance by the user on the storage medium such as the USB memory connected to the printing device.

Furthermore, each device above may specifically be configured as a computer system configured from a microprocessor, a ROM, a RAM, a hard disk drive, a display unit, a keyboard, a mouse, and the like. A computer program is stored on the RAM or the hard disk drive. Each device achieves a function thereof by the microprocessor operating according to the computer program. Here, the computer program is configured by combining a plurality of command codes indicating instructions to the computer to achieve a predetermined function.

Furthermore, a portion or an entirety of the components configuring each device above may be configured from one system LSI (Large Scale Integration). The system LSI is a super multifunctional LSI manufactured by accumulating a plurality of configuration parts on one chip and is specifically a computer system configured including a microprocessor, a ROM, a RAM, and the like. A computer program is stored on the RAM. The system LSI achieves a function thereof by the microprocessor operating according to the computer program.

Furthermore, a portion or an entirety of the components configuring each device above may be configured from an IC card that is removable from each device or a single module. The IC card or the module is a computer system configured from a microprocessor, a ROM, a RAM, and the like. The IC card or the module may be configured to include the above super multifunctional LSI. The IC card or the module achieves a function thereof by the microprocessor operating according to a computer program. This IC card or this module may be configured to be tamper resistant.

Furthermore, one or more embodiments of the present invention may be a method that executes the steps (procedures) illustrated above. Moreover, one or more embodiments of the present invention may be a computer program that realizes this method by a computer or a digital signal made from this computer program.

Furthermore, one or more embodiments of the present invention may be a recording of the above computer program or above digital signal on a non-temporary recording medium that can be read by a computer, for example, a flexible disk, a hard disk, a CD-ROM, an MO, a DVD, a DVD-ROM, a DVD-RAM, a BD (Blu-ray [registered trademark] Disc), a semiconductor memory, or the like. Moreover, it may be the above digital signal recorded on these non-temporary recording mediums.

Furthermore, one or more embodiments of the present invention may be configured to transmit the above computer program or above digital signal over a network, a data broadcast, or the like, representative examples thereof being a telecommunications line, a wireless or wired communication line, and the Internet.

Furthermore, one or more embodiments of the present invention may be a computer system comprising a microprocessor and a memory, wherein this memory stores the above computer program and the microprocessor operates according to the computer program.

Furthermore, it may be implemented by another independent computer system by recording the above program or above digital signal on the above non-temporary recording medium and transporting this or by transporting the above program or the above digital signal over the above network or the like.

Furthermore, the above embodiments and the above modified examples may be combined with each other. Also, the features of these embodiments and examples can be combined with each other according to various combinations, not limited to the specific combinations disclosed herein.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Explanation of References]

- 10: Printing device
- 11: Fingerprint authentication device
- 12: Memory
- 13: Printing engine
- 14: Connection I/F
- 15: LCD
- 16: Operation panel
- 16a: Instruction buttons
- 16b: Previous page display instruction button
- 16c: Next page display instruction button
- 16d: Printing instruction button
- 17: ASIC
- 19: USB memory
- 21: Authentication unit
- 22: Storage unit
- 23: Printing unit
- 24: Connection unit
- 25: Display unit
- 26: Specifying unit
- 27: Setting unit
- 28: Changing unit

## Claims

1. A printer that prints based on printing settings information included in first printing information, comprising:
a memory (12) that stores second printing information that includes printed printing settings information;
a setting unit (27) that, when the first printing information and the second printing information have common information, sets the printed printing settings information as the printing settings information; and
an image forming unit that performs image forming based on the printing settings information set by the setting unit.

2. The printer according to claim 1, wherein
the memory (12) stores one or more second printing information,
the second printing information includes count information (34) indicating a printed count, and
the setting unit (27) sets the printed printing settings information as the printing settings information based on the count information (34) included in each of the one or more second printing information.

3. The printer according to claim 1, wherein
the memory stores (12) one or more second printing information,
the second printing information includes time information (35) indicating a printed time, and
the setting unit (27) sets the printed printing settings information as the printing settings information based on the time information (35) included in each of the one or more second printing information.

4. The printer according to claim 3, wherein the time information (35) is a printed time printed within a predetermined period.

5. The printer according to claim 3, wherein the time information (35) is a newest printed time with a printing time as a reference.

6. The printer according to any one of claims 1 to 5, further comprising:
an identification unit (21) that acquires identification information to identify a user, wherein
the second printing information further comprises acquired identification information acquired in advance, and
the setting unit (27), when the identification information is the same as the acquired identification information, sets the printed printing settings information as the printing settings information.

7. The printer according to claim 1, wherein
the first printing information includes filename information,
the second printing information includes printed filename information, and
the setting unit (27), when a predetermined number or more of characters included in the filename information and characters included in the printed filename information are the same, determines the first printing information and the second printing information to have the common information.

8. The printer according to claim 7, wherein
the filename information comprises first extension information (32b) indicating a data type,
the printed filename information comprises second extension information (32b) indicating a data type, and
the setting unit, when the first extension information and the second extension information are the same, determines the first printing information and the second printing information to have the common information.

9. The printer according to claim 7, wherein
the memory further stores relation information that relates one or more data types, and
the setting unit, when the first extension information and the second extension information (32b) are related based on the relation information, determines the first printing information and the second printing information to have the common information.

10. The printer according to claim 1, wherein
the setting unit
determines the printed filename information having the most characters that are the same as the characters included in the filename information when the memory (12) stores a plurality of second printing information that have the common information, and
sets the printed printing settings information as the printing settings information based on the second printing information that includes the determined printed filename information.

11. The printer according to any one of claims 1 to 10, further comprising:
a display unit (25) that displays the printed printing settings information set by the setting unit (27); and
a changing unit (28) that accepts a change in the printed printing settings information, wherein
the image forming unit performs the image forming based on the change.

12. The printer according to claim 11, wherein
the memory (12) stores item information indicating a change count based on the change accepted by the changing unit (28), and
the display unit (25) displays the printed printing settings information set by the setting unit based on the item information.

13. The printer according to claim 12, wherein the display unit (25) displays the printed printing settings information in order of greatest change count included in the item information.

14. The printer according to any one of claims 11 to 13, comprising:
a connection unit (24) that connects a storage medium (19), and
a specifying unit (26) that specifies a printing target from one or more printing information included in the storage medium, wherein
the display unit (25) displays in order one or more printing settings information stored in the storage medium (19) when the storage medium is connected to the connection unit (24), and
the specifying unit (26) accepts the designation after the displaying.
